# NEW EUROPEAN PATENT SPECIFICATION

(11) **EP 0 579 290 B2**
(45) Date of publication and mention of the opposition decision: **04.04.2001**
(45) Mention of the grant of the patent: 14.01.1998
(21) Application number: 93115989.1
(22) Date of filing: 14.11.1988
(51) Int. Cl.: C01B 3/56, B01D 53/04, C01B 3/38, C01B 3/52, C01B 31/18

(54) **Separation of gas mixtures including hydrogen**
Trennung von Wasserstoff enthaltenden Gasgemischen
Séparation de mélanges gazeux comprenant de l'hydrogène

(30) Priority: 16.11.1987 GB 8726804
(43) Date of publication of application: 19.01.1994
(62) Divisional of application: 88310723.7
(73) Proprietor: The BOC Group plc, Windlesham Surrey GU20 6HJ (GB)
(72) Inventor: Krishnamurthy, Ramachandran, Piscataway, New Jersey 08854 (US); Stokley, Alan George, Wokingham, Berkshire RG11 +NY (GB); Lerner, Steven, South Berkeley Heights, New Jersey 07922 (US); Shukla, Yagya, Roselle Park, New Jersey 07204 (US)
(74) Representative: Wickham, Michael

(56) References cited:
- EP-A- 0 194 765
- EP-A- 0 289 877
- EP-A- 0 307 843
- DE-A- 3 427 804

## Description

This invention relates to the separation of gas mixtures typically including hydrogen. It is particularly concerned with the separation of gas mixtures including hydrogen that are formed by reforming hydrocarbon with steam. The reaction between hydrocarbon and steam produces a gas mixture comprising hydrogen, carbon monoxide, carbon dioxide and water vapour as well as typically some residual methane.

Various processes are known for separating pure product from such mixtures. Some processes include an initial so-called shift reaction in which the carbon monoxide is converted to carbon dioxide. Such processes are unsuitable for use when carbon monoxide is desired as a product. These and other processes frequently employ cryogenic distillation in order to effect separation between hydrogen and the other constituents of the mixture after removal of carbon dioxide. However, cryogenic separation processes tend to have a high capital cost, particularly if more than one pure product is required.

The separation of hydrogen-rich gas mixtures, that is gas mixtures containing more than 50% by volume of hydrogen, by pressure swing adsorption is also well known. One such pressure swing adsorption (PSA) cycle for separating hydrogen-rich gas mixture is disclosed in US patent specification 3 430 418. In the cycles disclosed therein, the hydrogen-rich gas mixture is separated into hydrogen product and a waste gas stream. Many commercially practised PSA processes utilise a similar cycle. They all have in common the feature of separating the incoming gas mixture into a hydrogen product stream and a single vent gas stream. The vent gas stream is however generally unsuitable for the production of carbon monoxide as its carbon monoxide content is relatively low.

A more elaborate PSA cycle for separating a gas mixture rich in hydrogen is described in European patent application 8882 A. The disclosed cycles are stated to be suitable for separating a gas mixture comprising hydrogen, methane, and C₂ or higher hydrocarbons to recover separate hydrogen and methane products. There is no discussion of the use of the cycle to separate hydrogen and carbon monoxide products from a gas mixture comprising hydrogen, carbon monoxide and carbon dioxide, and hence there is no discussion as to how the process might be integrated into a plant using a steam reformer to produce hydrogen and carbon monoxide products.

Another proposal for separating gas mixtures comprising hydrogen and two other components is disclosed in International patent application WO 86/05414. An example is given in this patent application of the separation of gas mixtures rich in hydrogen and carbon monoxide and with relatively low proportions of carbon dioxide (e.g. 1.5% by volume). There is no disclosure as to how such a process might be integrated into a plant for reforming hydrocarbon by reaction with steam. Moreover, the carbon dioxide concentrations from such a reformer are generally considerably higher than 1.5% by volume. In addition, the disclosed process withdraws both hydrogen and carbon monoxide-enriched gas from the same location. In practice, this makes it difficult to obtain a high purity hydrogen product.

There is thus a need for a non-cryogenic method which makes possible the efficient production of relatively pure hydrogen and carbon monoxide products from a gas mixture formed by reforming hydrocarbon with steam. Such a need is not met by a process described in German patent application 3 427 804 A1 which discloses reforming hydrocarbon with carbon dioxide and then separating the resultant mixture into separate streams comprising carbon monoxide, hydrogen and carbon dioxide but discloses no specific means for effecting this separation.

According to the present invention there is provided a method of forming hydrogen and carbon monoxide products from hydrogen, comprising reforming hydrocarbon to form a gas mixture including hydrogen, carbon monoxide, and carbon dioxide, separating carbon dioxide from the mixture by means of an absorbent, subjecting the gas mixture from which the carbon dioxide has been separated to a first separation by pressure swing adsorption to produce a hydrogen product, and a gas mixture enriched in carbon monoxide and, subjecting at least some of the gas mixture enriched in carbon monoxide to further separation by pressure swing adsorption to produce a carbon monoxide product, wherein the hydrocarbon is reformed with both steam and carbon dioxide, the carbon dioxide with which the hydrocarbon is reformed being at least some of that separated from the gas mixture or being taken from the separate source.

The absorbent is preferably ethanolamine.

The preliminary removal of carbon dioxide from the gas mixture facilitates the subsequent separation of the hydrogen product and enables a conventional pressure swing adsorption process for separating hydrogen, as described in US patent specification 3 430 418, to be used to generate product hydrogen and a gas mixture enriched in carbon monoxide.

The method and apparatus according to the present invention will now be described by way of example with reference to the accompanying drawing, in which:

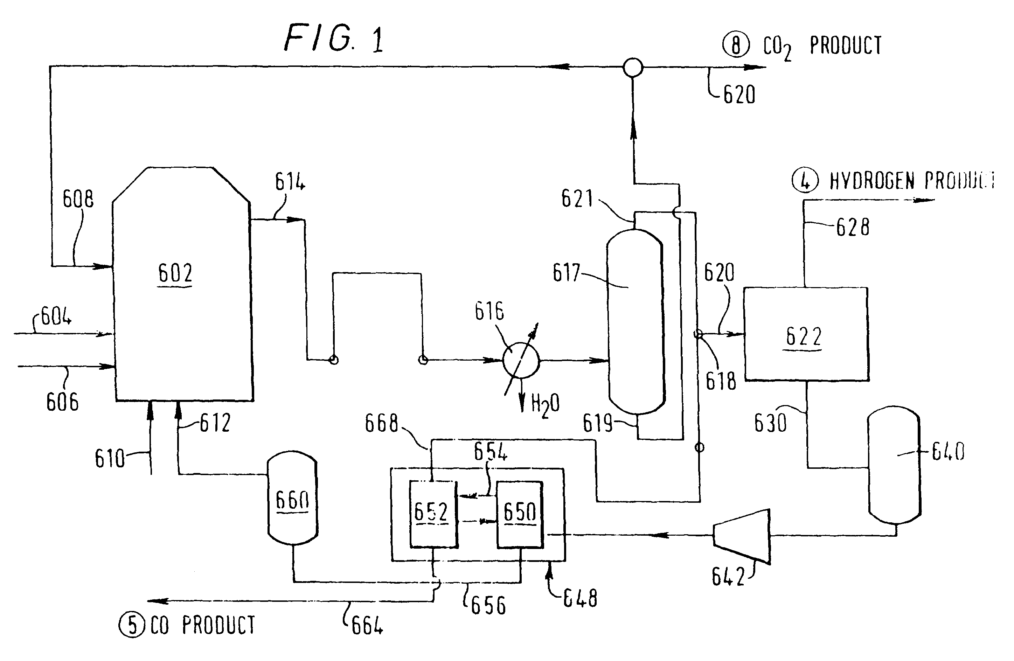

Figure 1 is a schematic circuit diagram illustrating an alternative plant for producing carbon monoxide and hydrogen products, which includes a reformer, a liquid phase separator for producing carbon dioxide, an apparatus for producing hydrogen by pressure swing adsorption, and an apparatus for producing carbon monoxide by pressure swing adsorption.

Figure 1 illustrates a plant for carrying out an alternative process according to the invention for separating gas mixtures comprising hydrogen, carbon monoxide and carbon dioxide. The plant includes a reformer 602 in which hydrocarbon introduced through an inlet 604 is reacted with steam introduced through an inlet 606 and with a recycled carbon dioxide stream introduced through an inlet 608.

The hydrocarbon typically comprises butane, though other lower alkanes may be used instead. In the event that such a higher hydrocarbon as butane is used, it rapidly and irreversibly reacts with steam and carbon dioxide to form carbon monoxide, hydrogen and methane. The methane so-formed then reacts as aforesaid to produce further carbon monoxide and hydrogen.

The following chemical equilibria are set up

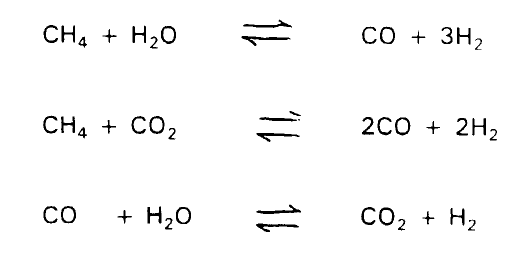

It can thus be appreciated that recycling the carbon dioxide enriched gas mixture to the reformer 602 enhances the carbon monoxide content of the gas mixture produced by the reformer.

There is produced a gas mixture comprising hydrogen, carbon monoxide, carbon dioxide, steam and unreacted methane which leaves the reformer 602 through an outlet 614 at a temperature and pressure dose to the operating temperature and pressure of the reformer 602. Typically, the reformer 602 is operated at elevated pressure, for example, in the range of 10 to 20 atmospheres absolute. Since the reactions between the hydrocarbon, carbon dioxide and steam are endothermic, it is necessary to provide heat to the reformer 602. This is done by combusting in the reformer 602 hydrocarbon fuel introduced through the inlet 610 and recycled waste gas from a downstream stage of the plant introduced through the inlet 612. This combustion creates an elevated temperature in the reformer 602 of the order of 850°C. The gas mixture is then passed from the reformer 602 to a cooler 616 in which it is cooled to about ambient temperature, thereby being condensed. The cooler 616 also separates the condensed water producing a gas mixture comprising hydrogen, carbon monoxide, carbon dioxide and methane. This mixture is passed into a carbon dioxide absorption system 617 which employs an organic liquid, such as ethanolamine, to absorb carbon dioxide thus providing a pure carbon dioxide product which is withdrawn through an outlet 619. A part of the carbon dioxide product is recycled to the inlet 608 of the reformer 602 while the remainder is withdrawn through a pipeline 620. A gas mixture comprising hydrogen, carbon monoxide and methane passes out of the absorption system 617 through its outlet 621 and is united in mixer 618, which if desired may merely be a union of two pipes, with another hydrogen-rich gas stream from a downstream part of the plant. The resulting gas mixture, typically comprising from about 50 to 85 mole per cent of hydrogen; from about 8 to 20 mole per cent of carbon monoxide and up to about 3 mole per cent of methane, enters a PSA separation plant 622 through an inlet. The separation plant 622 may be of a conventional kind since the carbon dioxide is separated from the mixture in the absorber system 617. The PSA separation plant 622 separates the incoming gas mixture to produce a pure hydrogen product withdrawn through an outlet 628 and carbon monoxide-enriched gas mixture withdrawn through an outlet 630 and collected in a carbon monoxide- enriched gas mixture storage tank 640. The purity of the products of the PSA plant is enhanced by the preliminary removal of carbon dioxide.

The storage tank 640 is employed as the source of feed gas for the next stage of the process which involves the PSA separation of a substantially pure carbon monoxide product. Thus, a compressor 642 continuously draws a gas mixture enriched in carbon monoxide from the storage tank 640 and raises it to a pressure preferably about 1 atmosphere in excess of the pressure of the gas entering the PSA separation plant 622 for separation. The compressed gas mixture enriched in carbon monoxide then passes to a PSA separator 648 comprising a first stage 650 and a second stage 652. In the first stage 650, constituents of the gas mixture more readily adsorbable than carbon monoxide are adsorbed to produce a gas mixture consisting essentially of hydrogen and carbon monoxide which passes out of the first stage 650 through conduit 654 into the second stage 652 for further separation. The adsorbed gas is then desorbed and some of it is vented from the first stage 650 through an outlet 656, being received in a tank 660 which is employed as a source of fuel supplied to the inlet 612 of the reformer 602.

In the second stage 652 of the plant 648, carbon monoxide is adsorbed from the gas mixture to produce a gas mixture rich in hydrogen. A part of this gas is passed out of the plant 648 through an outlet 668 and, as aforesaid, is mixed with the carbon dioxide-free gas mixture leaving the absorber system 617. Another part of the hydrogen-rich gas is returned through conduit 666 to the first stage 650 of the plant 648 where it helps to purge desorbed gases from the adsorbent. In order to produce a relatively pure carbon monoxide product from the plant 648, carbon monoxide adsorbed by the second stage adsorbent is desorbed with the aid of a vacuum pump (not shown in Figure 1) and is withdrawn through the outlet 664. Typically, the carbon monoxide product contains less than 200 volumes per million of methane, less than 10 volumes per million of carbon dioxide and less than 1500 volumes per million of hydrogen. A plant as shown in Figure 1 is capable of producing carbon monoxide in relatively high yield in comparison with known non-cryogenic processes. This is mainly as a result of employing the combination of the absorber system 617 to remove carbon dioxide from the gas mixture produced in the reformer 602, thus facilitating subsequent separation of hydrogen and carbon monoxide. Preferably, the plant described in Figure 5 of the parent application (EP-A-0 317 235) is used as the PSA separation plant 648 in the plant shown in Figure 1.

The method and apparatus according to the invention are further illustrated by the following example.

Referring now to Figure 1, butane is fed through inlet 604 to reformer 602 at a flow rate of 0.020m³/s (2590 scfh) (scfh = standard cubic feet per hour), a temperature of 315.5°C (600°F) and a pressure of 1894 kPa (260 psig). The butane is reacted in the reformer 602 with steam supplied at a flow rate of 0.385 m³/s (49028 scfh) to the inlet 604 of the reformer 602 at a temperature of 371°C (700°F) and a pressure of 1894 kPa (260 psig). The butane is also reacted with a stream of carbon dioxide which is produced in the absorption system 617 and which is returned to the reformer 602 through its inlet 608 at a temperature of 167°C (300°F), a pressure of 1894 kPa (260 psig) and a flow rate of 0.067m³/s (8546 scfh). In order to provide heat for the reforming reactions, butane fuel supplied through an inlet 610 at a flow rate of 0.0079m³/s (1005 scfh) a temperature of 24°C (75°F) and a pressure of 239 kPa (20 psig) is combusted in the reformer 602. In addition, there is also combusted in the reformer 602 a waste gas stream from the tank 660 supplied to the inlet 612 of the reformer 602 at a flow rate of 0.079m³/s (10035 scfh), a pressure of 122 kPa (3 psig) and a temperature of 24°C (75°F).

There is withdrawn from the reformer 602 through outlet 614 a gas mixture at a flow rate of 0.60m³/s (76500 scfh), pressure of 1618 kPa (220 psig), and a temperature of 850°C (1500°F). On a dry gas flow basis, this gas mixture has a flow rate of 0.325 m³/s (41352 scfh) and a composition as follows : hydrogen - 56.2 mole per cent; carbon monoxide - 17.2 mole per cent; methane - 1.1 mole per cent; carbon dioxide - 25.5 mole per cent. The gas mixture is passed through the cooler 616 to condense water therefrom. It is then passed into the absorption system 617 to produce first the aforementioned stream of carbon dioxide which is recycled to the reformer 602 and secondly a carbon dioxide product stream which is withdrawn through the outlet 620 at a flow rate of 0.015m³/s (1979 scfh) and a temperature of 24°C (75°F). The resulting carbon dioxide-free gas mixture is fed to the PSA separation plant 622 in which it is separated into a hydrogen product stream and a carbon monoxide-enriched gas mixture. The hydrogen product stream is withdrawn through the outlet 628 at a flow rate of 0.13m³/s (16742 scth), a pressure of 1480 kPa (200 psig), and a temperature of 24°C (75°F). The hydrogen product contains no measurable traces of methane and carbon dioxide and less than 1 volume per million of carbon monoxide. The carbon monoxide-enriched gas mixture is withdrawn from the separator 622 through the outlet 630 and is fed to the storage tank 640 from which it is withdrawn by the compressor. The mixture is compressed in the compressor 642 and fed to the PSA separation plant in which it is separated into a carbon monoxide product, a hydrogen-rich gas stream which is mixed with the carbon dioxide-free gas stream leaving the absorber 617, and a waste gas stream which is passed to the tank 660. The carbon monoxide product is withdrawn from the plant 648 through the outlet 664 at a rate of 0.032 m³/s (4052 scfh), a pressure 274 kPa (25 psig) and a temperature of 24°C (75°F). The carbon monoxide product contains less than 1500 vpm of hydrogen, less than 200 vpm of methane, and less than 10 vpm of carbon dioxide. The hydrogen-rich gas mixture is withdrawn from the plant 648 through the outlet 668 and the waste gas is withdrawn through the outlet 656. The waste gas has a composition, excluding water vapour, as follows : hydrogen - 64.8 mole per cent; carbon monoxide - 30.5 mole per cent; and methane - 4.7 mole per cent.

## Claims

1. A method of forming hydrogen and carbon monoxide products from hydrocarbon, comprising reforming hydrocarbon to form a gas mixture including hydrogen, carbon monoxide, and carbon dioxide, separating carbon dioxide from the mixture by means of an absorbent, subjecting the gas mixture from which the carbon dioxide nas been separated to a first separation by pressure swing adsorption to produce a hydrogen product, and a gas mixture enriched in carbon monoxide and, subjecting at least some of the gas mixture enriched in carbon monoxide to further separation by pressure swing adsorption to produce a carbon monoxide product, wherein the hydrocarbon is reformed with both steam and carbon dioxide, the carbon dioxide with which the hydrocarbon is reformed being at least some of that separated from the gas mixture or being taken from a separate source.

2. A method according to claim 1, wherein said absorbent is ethanolamine

## Patentansprüche

1. Verfahren zum Bilden von Wasserstoff- und Kohlenmonoxidprodukten aus Kohlenwasserstoff umfassend, daß Kohlenwasserstoff umgebildet wird, um eine Gasmischung zu bilden, die Wasserstoff, Kohlenmonoxid und Kohlendioxid enthält, daß Kohlendioxid von der Mischung mittels eines Absorptionsmittels getrennt wird, daß die Gasmischung, von der das Kohlendioxid getrennt worden ist, einer ersten Trennung durch Druckwechseladsorption unterzogen wird, um ein Wasserstoffprodukt und eine an Kohlenmonoxid angereicherte Gasmischung zu erzeugen, und daß zumindest etwas von der an Kohlenmonoxid angereicherten Gasmischung einer weiteren Trennung durch Druckwechseladsorption unterzogen wird, um ein Kohlenmonoxidprodukt zu erzeugen, wobei der Kohlenwasserstoff mit sowohl Dampf als auch Kohlendioxid umgebildet wird, wobei das Kohlendioxid, mit dem der Kohlenwasserstoff umgebildet wird, zumindest etwas von demjenigen ist, das von der Gasmischung getrennt worden ist, oder von einer separaten Quelle genommen wird.

2. Verfahren nach Anspruch 1, wobei das Absorptionsmittel Aminoethanol ist.

## Revendications

1. Procédé de formation d'hydrogène et de monoxyde de carbone produits à partir d'un hydrocarbure, comprenant le reformage de l'hydrocarbure pour former un mélange gazeux comprenant de l'hydrogène, du monoxyde de carbone et du dioxyde de carbone, la séparation, à l'aide d'un absorbant, du dioxyde de carbone du mélange, la soumission du mélange gazeux dont le dioxyde de carbone a été séparé, à une première séparation par adsorption avec variation cyclique de la pression pour produire un produit riche en,ou constitué par, de l'hydrogène et un mélange gazeux enrichi en monoxyde de carbone, et la soumission d'au moins une partie du mélange gazeux enrichi en monoxyde de carbone à une séparation supplémentaire par adsorption avec variation cyclique de la pression, pour obtenir un produit riche en ou constitué par du monoxyde de carbone, procédé dans lequel l'hydrocarbure est reformé avec, à la fois, de la vapeur d'eau et du dioxyde de carbone, le dioxyde de carbone avec lequel l'hydrocarbure est reformé étant constitué par au moins une partie de celui séparé du mélange gazeux ou étant prélevé sur une source séparée.

2. Procédé selon la revendication 1, dans lequel ledit absorbant est de l'éthanolamine.
